(19)

**Europäisches Patentamt**
**European Patent Office**
**Office européen des brevets**

(11) **EP 4 765 624 A1**

(12) **EUROPEAN PATENT APPLICATION**

(43) Date of publication:
24.06.2026 Bulletin 2026/26

(21) Application number: 25204715.4

(22) Date of filing: **25.09.2025**

(51) International Patent Classification (IPC):
**H02P 21/14** (2016.01)   **H02P 21/16** (2016.01)
**H02P 23/14** (2006.01)

(52) Cooperative Patent Classification (CPC):
**H02P 21/16; H02P 21/141; H02P 23/14**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **17.12.2024 EP 24220765**

(71) Applicant: **Polestar Performance AB
405 31 Gothenburg (SE)**

(72) Inventors:
• **HU, Yifei**
 **417 62 Göteborg (SE)**
• **HOFWIMMER, Rasmus**
 **413 16 Göteborg (SE)**

(74) Representative: **Zacco Sweden AB**
 **P.O. Box 5581**
 **Löjtnantsgatan 21**
 **114 85 Stockholm (SE)**

(54) **A METHOD FOR COMPENSATING A TOTAL FORWARD RESISTANCE OCCURRING ACROSS CONDUCTING COMPONENTS OF AN ELECTRIC MACHINE**

(57) The present disclosure relates to a method (100) for determining a compensation parameter for compensating a total forward resistance occurring across conducting components of an electric machine, the method comprising the steps of controlling (101) the speed of the electric machine to attain a first speed, providing (102) a compensation parameter that satisfy condition (i) in which a maximum actual phase voltage magnitude, Uact, is equal to a reference voltage, Uref; and/or (ii) in which a voltage setpoint, Uset, is equal to said maximum actual phase voltage magnitude Uact. Further, the method comprises logging (103) the compensation parameter in a memory device accessible by an electric drive system comprising said electric machine.

Figure 1

**Description**

TECHNICAL FIELD

The present disclosure relates to a method for compensating a total forward resistance occurring across conducting components of an electric machine. Further, the disclosure relates to a test instrument, a vehicle and a computer-readable storage medium.

BACKGROUND

Forward voltage drop normally indicates the voltage drop across a conducting power module (MOSFET, IGBT, GaN, or diode) device and connection between inverter and electric machine due to resistance. Generally, the voltage drop in a circuit is directly proportional to the resistance and the amount of current flowing through the resistance.

However, in an electric drive system, the total forward voltage drop is not only the forward voltage drop across the conducting power module, but also the forward voltage drop across the cables or the bus bars connecting the electric machine and the inverter as well as other mechanical connections resistances.

Thus, in an electric drive system it is challenging to identify the total forward voltage drop and consequently also the total forward resistance. As it is challenging to identify the total forward voltage drop resistance, it is also challenging to compensate the total forward voltage drop resistance.

An advantage of being able to compensate the total forward drop resistance is that it would allow for benefits in terms of efficiency of controlling the electric machine accurately as the voltages applied on the machine windings will be exactly or substantially the same as the reference voltage. Additionally, compared to under-compensating, compensating the total forward resistance correctly enables achieving a maximum voltage utilization at high speed, resulting in achieving a larger torque delivery at high speed. Thus, it would increase the overall efficiency of an electric drive system comprising an electric machine. Compared to overcompensating, compensating the total forward resistance correctly enhances the control stability of the electric machine

Currently, there are no methods in the present art that are able to prepare electric drive systems in a manner that allow compensation of the total forward resistance across conducting components of an electric machine (e.g. components connecting an electric machine to inverter and power module) with enough accuracy and efficiency.

Based on the aforementioned, there are needs for methods in the present art that are able to prepare or provide means for an electric drive system to be able to accurately compensate the total forward resistance across conducting components of an electric machine thereof. Specifically, there is a need for methods in the present art that are able to prepare the electric drive system to compensate the total forward resistance across conducting components of an electric machine with high accuracy and/or efficiency.

Therefore, it would be desirable to provide a more efficient and accurate method for determining a compensation parameter for compensating a total forward resistance occurring across conducting components of an electric machine, to allow an electric drive system to utilize the compensation parameter.

SUMMARY

It is therefore an object of the present disclosure to alleviate at least some of the mentioned drawbacks to provide a method for determining a compensation parameter for compensating a total forward resistance occurring across conducting components of an electric machine. Further, the present disclosure provides a test instrument and a computer-readable storage medium comprising instructions for performing such a method. Further, the disclosure provides a vehicle.

The present disclosure is at least partly based on the insight that the method herein is more efficient and/or accurate compared to conventional methods of controlling an electric machine, as herein a compensation parameter is provided by providing a compensation parameter based on one or two conditions, where the compensation parameter is logged to be accessible by an electric drive system. The method may also be referred to as "a method for preparing/configuring an electric drive system for compensating a total forward resistance occurring across conducting components of an electric machine" or "a method for determining and implementing a compensation parameter for compensating a total forward resistance occurring across conducting components of an electric machine".

The present disclosure relates to a method for determining a compensation parameter for compensating a total forward resistance occurring across conducting components of an electric machine. The method comprises a step of controlling the speed of the electric machine to attain a first speed. Further, the method comprises the step of providing a compensation parameter that satisfy condition:

> (i) in which a maximum actual phase voltage magnitude ($U_{act}$) is equal to a reference voltage ($U_{ref}$) and/or

> (ii) in which a voltage setpoint ($U_{set}$) (from a current controller) is equal to said maximum actual phase voltage magnitude ($U_{act}$).

The method further comprises logging the compensation parameter in a memory device accessible by an electric drive system comprising said electric machine. Thus, a compensation parameter may be provided and logged in order to allow an electric drive system to access and use the compensation parameter.

Generally, it is not accurate enough to have one unified value that fits all system. However, the method provides a repeatable way of accurately determining compensation parameter that can be repeated for different systems independent of having rig access and offline calibration access, and covering manufacturing tolerances when it comes to difference in each individual electric drive system. Furthermore, another benefit of this method is that it may be scripted as a fully automatic routine embedded in a flashing or diagnostics routine, easily operable with a common engineering tool that is accessible to most of engineers or technicians in a workshop.

The compensation parameter may be provided to satisfy condition (i) and condition (ii), or condition (ii) depending on said attained first speed. In other words, depending on a magnitude/value of the first speed attained and maintained.

Specifically, upon controlling the first speed to be a field-weakening speed, the compensation parameter is provided (during said field-weakening speed) to satisfy condition (i) and (ii). The reference voltage ($U_{ref}$) is based on, or corresponds to a DC link voltage in said field-weakning speed. The DC link voltage may be obtained from an inverter. Condition (ii) may be satisfied upon reaching the field-weakening speed i.e. by default.

In some aspects the reference voltage, $U_{ref}$, may be based on the following expression:

$$\frac{U_{dc}}{\sqrt{3}} * \text{factor}$$

Factor may be a pre-determined factor. The pre-determined factor may vary based on non-linearity values and/or modulation methods. In some aspects, the reference voltage, $U_{ref}$, may be directly derived from equation: $U_{ref} = \frac{U_{dc}}{\sqrt{3}} *$ factor. The factor may be any suitable factor, e.g. above, equal or below 1.

Further, upon controlling the first speed to be a speed lower than a field-weakening speed, the compensation parameter may be provided to (only) satisfy condition (ii).

After obtaining the compensation parameter, the compensation parameter may be used in all drive cycles and drive conditions (not the first speed) of a vehicle.

Upon/while providing the compensation parameter that satisfy condition (i) i.e. the method may target to satisfy condition (i) by performing the following sub-steps in the method-step of providing: determining, in a flux controller, an actual stator flux, ($\psi_{act}$), the actual stator flux being an amount of magnetic flux of a stator of said electric machine, and determining the maximum actual phase voltage magnitude ($U_{act}$) based on the actual stator flux ($\psi_{act}$). Further, feeding the maximum actual phase voltage magnitude ($U_{act}$) and the reference voltage to a controller configured to receive the maximum actual phase voltage magnitude ($U_{act}$) and the reference voltage ($U_{ref}$) as input to provide the compensation parameter as output. Further, controlling the compensation parameter until said maximum actual phase voltage magnitude, ($U_{act}$) is equal to said reference voltage ($U_{ref}$) and determining the compensation parameter after controlling.

In other words, the aforementioned steps may describe how the compensation parameter that satisfy condition (i) is provided/determined.

Upon performing the method step of providing the compensation parameter that satisfy condition (ii) while said first speed is lower than a field-weakening speed, i.e. upon/while providing the compensation parameter that satisfy condition (ii) i.e. the method may target to satisfy condition (ii) by performing the following sub-steps in the method-step of providing: obtaining, by a stator flux observer, a stator flux ($\psi_{obs}$). Further, determining said maximum actual phase voltage magnitude ($U_{act}$) based on said stator flux ($\psi_{obs}$). Further, feeding the maximum actual phase voltage magnitude ($U_{act}$) and the voltage setpoint ($U_{set}$) as input, e.g. to a resistance calibration controller which is adapted to provide the compensation parameter as output. Moreover, calibrating/controlling said maximum actual phase voltage magnitude ($U_{act}$) and said voltage setpoint ($U_{set}$) until said voltage setpoint ($U_{set}$) is equal to said maximum actual phase voltage magnitude ($U_{act}$), and determining the compensation parameter after controlling.

In other words, the aforementioned steps may describe how the compensation parameter that satisfy condition (ii) is provided/determined.

The method may after or prior to logging comprise the step of calculating based on the compensation parameter, a time compensation parameter ($t_{fTotComp}$) for feeding to a pulse width modulator (PWM) to compensate said total forward voltage resistance.

The modulator output may be an output from a PWM unit. The PWM unit may use a voltage setpoint as an input value to set e.g. time-period/on-time and/or duty cycle for each phase so to control the electrical machine. Accordingly, the final output may be a compensating time to said duty cycle (e.g. compensating duty cycle) or compensation on-time to said on-time.

The time compensation parameter $t_{fTotComp}$ may be based on the expression:

$$\frac{R_{fTotComp} \cdot I_{ph}}{U_{dc}} \cdot T_{sw}$$

wherein $T_{sw}$ is a switching period. The switching period may be a switching period of an inverter/a conducting power module (e.g. components thereof), $I_{ph}$ is a phase current through the components of the conducting power module, either an actual/measured phase current or a reference phase current. $R_{fTotComp}$ is said resistance compensation parameter. Accordingly, the time compensation parameter may be derived directly by equation:

$$t_{fTotComp} = \frac{R_{fTotComp} \cdot I_{ph}}{U_{dc}} \cdot T_{sw}$$

Accordingly, $I_{ph}$ may be the phase current through e.g. diodes, transistors and the like of the conducting power module of e.g. the inverter of the electric machine. $R_{fTotComp}$ may be the pre-determined compensation parameter that is calculated offline and logged in the memory unit, thereby allowing for the electric drive system to fetch the compensation parameter from the memory unit upon control of the electric drive system.

Advantageously, the time compensating parameter may be obtained by an expression which may be utilized in a power and data efficient manner.

The step of controlling the speed may comprise determining whether the electric machine is in a free-spin state in which the electric machine is operable to rotate independent of influence by an external load torque. The method then may comprise, in response to determining that the electric machine is not in a free-spin state, providing an instruction for controlling the electric machine to said free-spin state, or in response to determining that the electric machine is in said free-spin state, controlling the speed to attain the first speed. The determining may be performed by control circuitry, i.e. automatically.

The instruction may instruct a control system or a user to control the electric machine to said free-spin state by at least one of disconnecting the electric machine from a wheel(s) and elevating the electric vehicle to disengage the vehicle from said external load torque. In other words, a free-spin condition is induced in the electric machine by mechanically isolating it from a wheel or, alternatively, by elevating the vehicle to negate external torque.

The step of providing a compensation parameter may be performed iteratively to obtain a plurality of compensation parameters, wherein the method comprises, prior to logging averaging the plurality of compensation parameters to obtain an average compensation parameter to be logged in the memory device. Thereby, there is reduced risk of obtaining an error value. For example, two or more compensation parameters may be provided.

For each performed iteration, the speed of the electric machine may be adjusted. The adjustment may be performed within a range of values. E.g. if the electric machine is in field weakening, the speed may be adjusted within a range that maintain the electric machine in said field weakening.

In some aspects, the method may comprise performing a plausibility check to said plurality of compensation parameters, determining, based on said plausibility check, if one or more of said plurality of compensation parameters are erroneous compensation parameters. Further, the method may comprise the step of removing each compensation parameter determined as an erroneous compensation parameter. The plausibility check may be computer-implemented.

The step of plausibility check may utilize threshold based filtering techniques.

Advantageously, potential erroneous compensation parameters may be removed to increase accuracy of the method.

The present disclosure further relates to a computer-readable storage medium storing one or more programs configured to be executed by an electric drive system, the one or more programs comprising instructions for performing the method according to any aspect herein.

Further, the present disclosure provides an electric drive system comprising an electric machine, the electric drive system being configured to execute the method of any aspect herein.

The disclosure further provides a vehicle comprising the electric drive system of any aspect herein. The electric drive system is not limited to vehicles. The electric drive system may be an electric drive system for other means.

The present disclosure may further disclose a test instrument for performing the method of any aspect herein. The test instrument may comprise means for setting a vehicle in a free-spin state. The test instrument may comprise a device/module/program or any other means for determining a compensation parameter. The test instrument may be an external test instrument or may be part of the vehicle and may be adapted to determine and log a compensation parameter for use by an electric drive system. The term may be interchanged with "external or on-board compensation parameter rig".

The present disclosure may also relate to a vehicle adapted to use a compensation parameter as derived by the method of any aspect herein.

BRIEF DESCRIPTION OF THE DRAWINGS

These and other features and advantages of the present disclosure will now be further clarified and described in more detail, with reference to the appended drawings;

Figure 1     illustrates a method in the form of a decision flowchart in accordance with some aspects of the present disclosure;

Figure 2     illustrates schematically an electric drive system in accordance with an aspect of the present disclosure;

Figure 3     illustrates schematically an electric drive system in accordance with another aspect of the present disclosure;

Figure 4    illustrates a method in the form of a flowchart in accordance with some aspects of the present disclosure;

Figure 5    illustrates schematically an electronic control unit in accordance with some aspects of the present disclosure;

Figure 6    illustrates schematically circuitry for controlling an electric machine in accordance with some aspects of the present disclosure; and

Figure 7    illustrates a vehicle comprising the electric drive system in accordance any aspect of the present disclosure.

DETAILED DESCRIPTION

In the following detailed description, some embodiments of the present disclosure will be described. However, it is to be understood that features of the different embodiments are exchangeable between the embodiments and may be combined in different ways, unless anything else is specifically indicated. Even though in the following description, numerous specific details are set forth to provide a more thorough understanding of the present disclosure, it will be apparent to one skilled in the art that the present disclosure may be practiced without these specific details. In other instances, well known constructions or functions are not described in detail, so as not to obscure the present disclosure.

It is also to be understood that the terminology used herein is for purpose of describing particular aspects only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. More specifically, the wording "one or more" of a set of elements (as in "one or more of A, B and C" or "at least one of A, B and C") is to be interpreted as either a conjunctive or disjunctive logic. Put differently, it may refer either to all elements, one element or combination of two or more elements of a set of elements. For example, the wording "A, B and C" may be interpreted as A or B or C, A and B and C, A and B, B and C, or A and C.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

The term "compensation parameter" may be interchanged with "compensation variable" and may refer to a value stored in a memory unit or a signal carrying information that represents the value (the signal may be outputted from e.g. a resistance calibration controller).

The term "electric machine" may refer to an electric motor. The electric motor may be a permanent magnet synchronous motor (PMSM) or an electrically excited synchronous motor (EESM) or any other suitable type of electric motor. The electric machine may comprise a stator and a rotor. The stator may be a three-phase stator having windings in three distinct phases (e.g. referred as A, B and C) configured to create a rotating magnetic field when a three-phase AC current is applied. This rotating magnetic field may interact with the rotor to produce torque.

The term "maximum actual phase voltage magnitude" may refer to a peak value of a sinusoidal AC voltage applied to each phase winding or the peak value of the fundamental component of a non-sinusoidal AC voltage, e.g., when operating in non-linear region. The maximum actual phase voltage magnitude may be indicative of a magnetic field strength generated in the stator, however this also depends on electric machine speed. In other words, the maximum actual phase voltage magnitude may be the highest voltage per phase that is able to be outputted by the inverter.

The term "total forward resistance" may refer to a sum of resistance across conducting components of an electric machine and associated components (e.g. inverter) causing voltage drops when convert power to/-from the electric machine in the electrical circuits. "Conducting components of an electric machine" may refer to conducting power modules (MOSFET, IGBT, GaN or diode), devices, cables or bus bars or any other mechanical connections connecting the inverter and the electric machine. In other words, the term may refer to resistance of components connecting the inverter and the electric machine. Accordingly, excluding components within the electric machine (such as windings). This resistance impacts the overall efficiency of the electrical system by generating heat within the components and impacts the torque availability at high speed / in field weakening by reducing the available voltage. Specifically, the term "total forward resistance" may refer to a sum of power module internal resistance and all other resistance that comes from the connection between inverter and electric machine.

The term "field weakening operation" may refer to a method used to increase a speed of an electric machine beyond a rated (base) speed. Field weakening may involve increasing the speed range of an electric machine by weakening the magnetic field of the electric machine over a speed range. Accordingly, by reducing magnetic field strength in the stator the torque decreases, enabling the motor to rotate at higher speeds. The term "field weakening operation" may be interchanged with "field weakening zone" or field weakening state". In other words, the term "field weakening operation" may refer to a state of the electric machine in which the magnetic field strength of the stator has been decreased while a speed of the electric machine is increased beyond a rated/base speed of the electric machine. In some aspects, to achieve said field weakening state, a maximum actual phase voltage magnitude is kept at a substantially maximum (or rated) value. The field weakening operation may be initiated by applying a maximized torque to said electric machine. Subsequently, once the electric machine reaches a pre-determined speed (e.g. base speed) a magnetic flux in the electric machine may be reduced to enable the electric machine to operate at a higher speed (i.e. higher than said base speed) at a reduced torque. During said field weakening operation voltage utilization from the battery pack may be maximized.

The term "flux controller" may be interchanged with "field-weakening controller".

The term "d-axis" and "q-axis" or "d-q values" used in the present disclosure may generally refer to the direct axis and the quadrature axis and are terms commonly used in motor control techniques, such as field-oriented control (FOC).

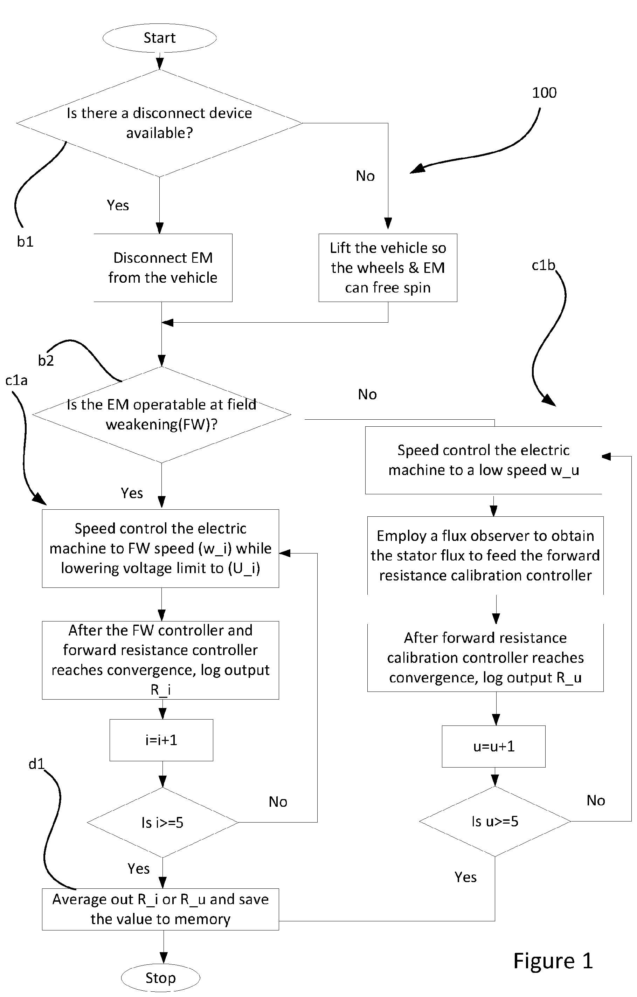

Figure 1 schematically illustrates, in the form of a flowchart, a method 200 that discloses two aspects of providing a compensation parameter defined as R_i and R_u in Figure 1.

The flowchart of Figure 1 may be computer-implemented partially, for example, the step of disconnect may be a physical step. The flowchart of Figure 1 discloses in b1 that it may be determined whether a disconnect device is available. Depending on whether a disconnect device is available a free-spin state may be implemented in at least two ways. Further, the method 100 discloses in b2 that it is determined whether an electric machine of the electric drive system is operatable at field weakening (FW). Depending on whether the electric machine is operatable at FW, the method 200 may proceed in two alternative decision routes cla, c1b. Note that, in some aspects, the method 200 may selectively choose between the two alternative decision routes, e.g. based on one or more pre-determined factors. The factors may be based on an estimation on which route that gives a more accurate compensation parameter.

Referring to decision route cla, the flowchart of Figure 1 discloses that the electric machine is speed controlled to a FW state. Further, the flowchart discloses that the method is operable to converge until FW controller (also referred to as "flux controller") and forward resistance controller reaches convergence the compensation parameter may be logged.

Referring to decision route c1b, it is disclosed that the electric machine may be controlled to a speed lower than FW. Further, a flux observer may be utilized to obtained and fed to the calibration controller which is configured to reach convergence. Once convergence is achieved, the compensation parameter is logged.

Optionally, as disclosed in the flowchart, the process may be iterated a plurality of times before to use an average output for logging into a memory device, as disclosed in d1.

The specific requirements/conditions for said convergence as specified in the aforementioned will be discussed in the following.

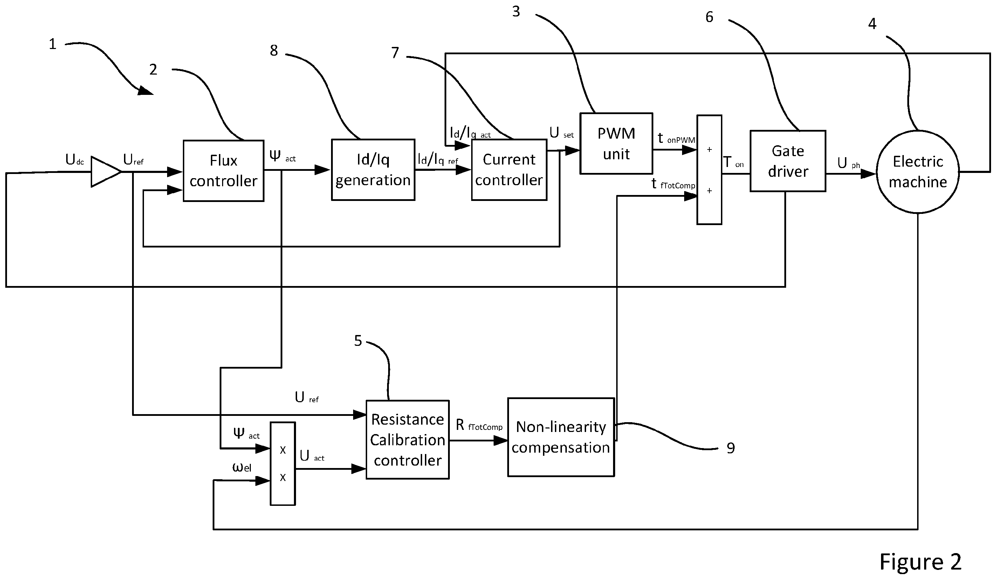

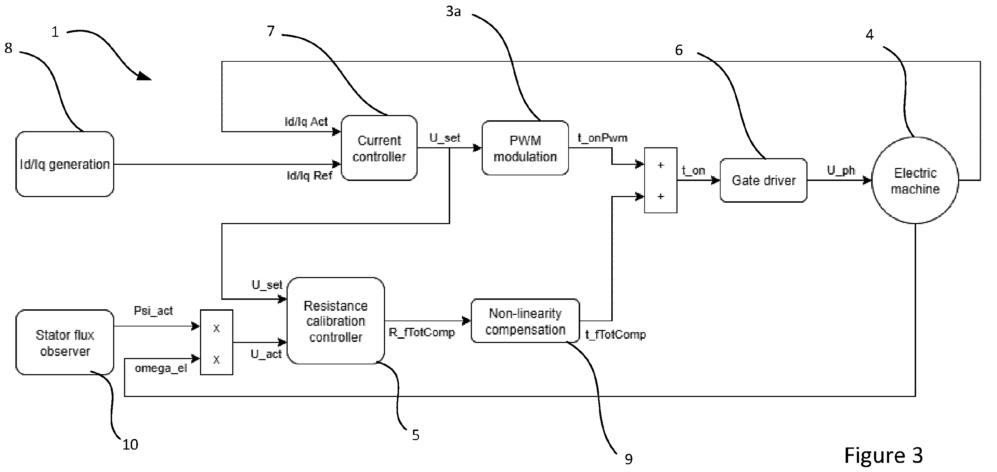

Figure 2 illustrates an electric drive system 1 in accordance with some aspects herein. The electric drive system 1 comprises modules/components for performing the method 100 as described in the flowchart of Figure 1. Nonetheless, the electric drive system 1 of Figure 1 is directed to perform the method 100 using the decision route c1a of Figure 1. However, the electric drive system 1 may be adapted to additionally or alternatively (as illustrated in Figure 3) perform the method 100 using the decision route c1b.

Figure 2 illustrates that the electric drive system 1 comprises a flux controller 2, an Id/iq generation module 8, a current controller 7, an electric machine 4, a PWM unit 3, a gate driver 6, a calibration controller 5 and a non-linearity compensation module. Referring now to FIG. 2, the various modules and functions/configurations thereof are described with particularity in the text that follows.

The calibration controller 5 illustrated in Figure 2 may output the total forward (equivalent) resistance compensation parameter ($R_{fTotComp}$. However, prior to, or during providing the compensation parameter, the electric drive system 1 may, as illustrated in Figure 2 receive, within the calibration controller, said reference voltage and said maximum actual phase voltage magnitude ($U_{ref}$, $U_{act}$). Accordingly, the calibration controller 5 may equalize/converge the reference voltage and the maximum actual phase voltage magnitude. The reference voltage may be based on a DC link voltage, which, if the electric drive system is operating during a field-weakening operation, preferably is a maximum available voltage from the DC link voltage. The DC link voltage may be obtained from the gate driver 6/inverter.

Figure 2 further illustrates that the maximum actual phase voltage magnitude may be derived from electric machine speed ($\omega_{el}$) and said actual stator flux ($\Psi_{act}$) within a module external to the calibration controller 5. Alternatively, not limited to the figure, said derivation may be done in the calibration controller 5. The electric machine speed may be received from one or more sensor devices of the electric drive system 1, e.g. a resolver and may be an instantaneous electric machine speed. Further, the actual stator flux may, as disclosed in Figure 2, be an output by the flux controller 2 based on a voltage set point and a reference voltage.

The flux controller 2 may operate according to a feedback-based control strategy. Accordingly, the flux controller may be a proportional-integral (PI) controller, a proportional-integral derivative (PID) controller, or any other suitable type a feedback-based controller with reference voltage ($U_{ref}$) and voltage setpoint ($U_{set}$) as inputs and actual stator flux $\psi_{act}$ as an output. As one could intentionally increase the available stator flux so that an available stator flux is larger than the real available flux from the system 1, then the flux controller 2 may be forced to automatically adjust the system 1 to find a working point (steady state) which is outputted from the flux controller. Thus, at a field-weakening operation the actual stator flux may reflect the actual point where the electric machine 4 is running. So, the maximum actual phase voltage magnitude applied on the electric machine windings may calculated as:

$$U_{act}=\psi_{act}*\omega_{el}$$

where $\omega_{el}$ is the electrical angular speed of the rotor of the electric machine 4 in rad/s (radians per second).

Figure 2 further illustrates a current controller 7 which may be configured to receive a reference current, which is based on the actual stator flux ($\psi_{act}$) and a torque request. Further, the current controller may be configured to receive an actual current measured in the windings of said stator of said electric machine 4 so to output said voltage setpoint based on the reference current and the actual current. The reference current and actual current may be received in d-q values or in A, B, C phase values. The current controller 7 may be operating according to a feedback-based control strategy. Accordingly, the current controller 7 may be a proportional-integral (PI) controller, a proportional-integral derivative (PID) controller, or any other suitable type a feedback-based controller.

As illustrated in Figure 2 the electric drive system 1 may comprise a $I_d/I_q$ generation module 8 configured output the reference current in the form of d-q values e.g. via Clarke/Park transformation. The $I_d/I_q$ generation module 8 may be a maximum torque per voltage (MTPV) or maximum torque per ampere (MTPA) generation module. Accordingly, the reference current may be in the form of pairs of reference current values $I_{d\_ref}$ and $I_{q\_ref}$. Further, the current controller 7 may also receive, from the electric machine 4, an actual/measured current, also in d-q values, $I_{d\_act}$ and $I_{q\_act}$ to output said voltage setpoint based on the reference current and the actual current.

Even though not illustrate in Figure 2 further illustrates that the electric drive system 1 may comprise a voltage supply unit which is operable to connect a DC power source (e.g. a battery pack of an electric vehicle) to be able to transfer energy to/from the electric machine.

The PWM unit 3 and gate driver 6 may form part of components of an inverter. Thus, in some aspects, at least the gate driver 6 may be referred to as a part of the inverter, or part of a power module of an inverter. The gate driver may comprise or be connected to power switching devices (e.g. IGBT's and/or MOSFETs). As appreciated by a skilled person in the art, the inverter may be configured to convert DC to AC. Thus, the gate driver is configured to, based on the final output ($T_{on}$), control switches to generate corresponding phase voltages ($U_{ph}$) for each phase of the electric motor 4. The final output may compensate a modulator output $T_{onpwm}$, so that the final output ($T_{on}$) is a sum of the compensation parameter (in the form of a time-compensation parameter, $t_{fTotComp}$) and the modulator output outputted from the PWM unit 3a. Accordingly, by compensating the modulator output the final output is achieved, which when received by the gate driver 6, allows the gate driver 6 to compensate the total forward voltage resistance.

Figure 2 further illustrates a non-linearity compensation module 9 configured to compensate non-linearities. The non-linearities may be compensated by providing the compensation parameter. Additionally or alternatively, the module 9 is configured to calculate $R_{fTotComp}$ to $T_{fTotComp}$.

Thus, the electric drive system 1 of Figure 2 may be configured to perform parts of or all of the flowchart of Figure 1. Accordingly, Figure 2 the electric drive system 1 may be configured to

- control the speed of the electric machine 4 to attain a field-weakening speed
- provide a compensation parameter that satisfy the below conditions:

    (i) in which a maximum actual phase voltage magnitude, $U_{act}$, is equal to a reference voltage, $U_{ref}$; and
    (ii) in which a voltage setpoint, $U_{set}$, is equal to said maximum actual phase voltage magnitude $U_{act}$, wherein the reference voltage, $U_{ref}$ is based on a DC link voltage.

- log the compensation parameter in a memory device accessible by an electric drive system 1.

Thus, the electric drive system may determine a compensation parameter for compensating a total forward resistance occurring across conducting components of an electric machine. Thus, the electric drive system may use the logged compensation parameter to compensate for a total forward resistance occurring across conducting components of the electric machine.

Upon reaching field-weakening state, condition (ii) may be satisfied as a maximum actual phase voltage magnitude may be kept at a substantially maximum (or rated) value corresponding to the voltage setpoint. Thus, condition (ii) may be satisfied with the help of a resistance calibration controller. So, for field-weakening case, both flux controller and resistance calibration controller may be configured to operate to set $U_{ref} = U_{set} = U_{act}$.

To satisfy condition (i) the electric drive system 1 may:

- determine, in the flux controller 2, an actual stator flux, $\psi_{act}$, the actual stator flux being an amount of magnetic flux of a stator of said electric machine 4;
- determine the maximum actual phase voltage magnitude, $U_{act}$, based on the actual stator flux, $\psi_{act}$;
- feed/input the maximum actual phase voltage magnitude, $U_{act}$ and the reference voltage, $U_{ref}$ to a controller 5 configured to receive the maximum actual phase voltage magnitude, $U_{act}$ and the reference voltage, $U_{ref}$ as input and provide the compensation parameter $R_{fTotComp}$ as output;
- control, e.g. in the controller 5, the compensation parameter until said maximum actual phase voltage magnitude, $U_{act}$, is equal to said reference voltage, $U_{ref}$. I.e. converging the maximum actual phase voltage magnitude, $U_{act}$, is equal to said reference voltage, $U_{ref}$;
- determine the compensation parameter after controlling, i.e. after convergence is reached.

The electric drive system 1 may control the speed after determining that the electric machine 4 is in a free-spin state. Accordingly, in response to determining that the electric machine 4 is not in a free-spin state the electric drive system 1 may provide an instruction for controlling the electric machine 4 to said free-spin state.

The instruction may instruct a control system or a user to control the electric machine 4 to said free-spin state by at least one of disconnecting the electric machine from a wheel, and elevating the electric vehicle to disengage the vehicle from said external load torque. The user may receive the instruction at a graphical user interface (GUI) connected to the electric drive system 1. The control system may be connected to, or part of the electric drive system 1.

Figure 3 illustrates an electric drive system 1 in accordance with some aspects herein. The electric drive system 1 comprises modules/components for performing the method 100 as described in the flowchart of Figure 1.

Figure 3 discloses corresponding modules as Figure 2 except that Figure 3 also illustrates a stator flux observer. Notably, the electric drive systems 1 of Figures 2 and 3 may be combined or merged.

Thus, the electric drive system 1 of Figure 3 may be configured to perform parts of or all of the flowchart of Figure 1, specifically decision route c1b of the flowchart of Figure 1. Accordingly, Figure 3 illustrates an electric drive system 1 that may be configured to

- control the speed of the electric machine 4 to attain a first speed that is not a field-weakening speed/lower than a field weakening speed;
- provide a compensation parameter that satisfy a condition (ii):
  where a voltage setpoint, $U_{set}$, is equal to said maximum actual phase voltage magnitude $U_{act}$;
- log the compensation parameter in a memory device accessible by an electric drive system 1.

Accordingly, the electric drive system 1 may control the calibration controller 5 (and/or associated modules) to converge the voltage setpoint, $U_{set}$, and said maximum actual phase voltage magnitude $U_{act}$.

The maximum actual phase voltage magnitude $U_{act}$ may be derived by using a stator flux observer. Specifically, the electric drive system 1 may, to satisfy condition (ii) be configured to:

- obtain, by a stator flux observer 10, a stator flux, $\psi_{obs}$
- determine said maximum actual phase voltage magnitude, $U_{act}$, based on said stator flux, $\psi_{obs}$ (and electric machine speed)
- feed the maximum actual phase voltage magnitude, $U_{act}$ and the voltage setpoint, $U_{set}$, as input to a controller 5 and provide the compensation parameter as output;
- control said maximum actual phase voltage magnitude, $U_{act}$ and said voltage setpoint, $U_{set}$ until said voltage setpoint, $U_{set}$, is equal to said maximum actual phase voltage magnitude, $U_{act}$,
- determine the compensation parameter after said control.

The step of control may be performed to converge $U_{act}$ and $U_{set}$, i.e. upon converging $U_{act}$ and $U_{set}$, the compensation parameter is logged. Accordingly, when speed is lower than field-weakening, $U_{set}$ and $U_{act}$ differ as $U_{set}$ may be low and $U_{act}$ is high. $U_{set}$ and $U_{act}$ differ mainly if there is no sufficient total resistance compensation regardless of field weakening or not.

The first speed may be any speed lower than the field weakening speed as appreciated by a skilled person in the art.

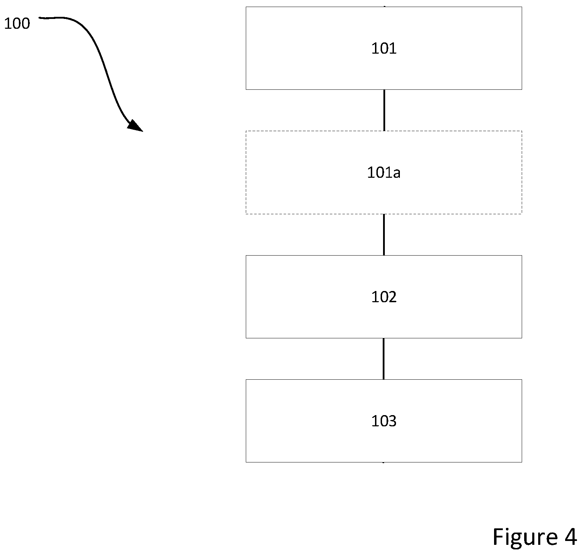

Figure 4 schematically illustrates a method 100 for determining a compensation parameter for compensating a total forward resistance occurring across conducting components of an electric machine, the method comprising controlling 101 the speed of the electric machine to attain a first speed. Further, comprising providing 102 a compensation parameter that satisfy condition (i) in which a maximum actual phase voltage magnitude, Uact, is equal to a reference voltage, Uref; and/or (ii) in which a voltage setpoint, Uset, is equal to said maximum actual phase voltage magnitude Uact. Further, the method 100 comprises logging (103) the compensation parameter in a memory device accessible by an electric drive system comprising said electric machine.

The method 100 further comprises in the step of controlling 101 the speed determining 101a whether the electric machine is in a free-spin state in which the electric machine is operable to rotate independent of influence by an external load torque. Further, the method 100 comprise in response to determining that the electric machine is not in a free-spin state, providing an instruction for controlling the electric machine to said free-spin state, or in response to determining that the electric machine is in said free-spin state, controlling the speed to attain the first speed.

The instruction may instructs a control system/-electronic control circuitry or a user to control the electric machine to said free-spin state by at least one of disconnecting the electric machine from at least one wheel, and elevating the electric vehicle to disengage the vehicle from said external load torque.

Thee step of providing 102 a compensation parameter may performed iteratively to obtain a plurality of compensation parameters, wherein the method 100 comprises, prior to logging 103 averaging the plurality of compensation parameters to obtain an average compensation parameter, i.e. by taking an average of several compensation parameters. The average compensation parameter may subsequently be logged in the memory device. The method 100 may further comprise performing a plausibility check to said plurality of compensation parameters, determining, based on said plausibility check, if one or more of said plurality of compensation parameters are erroneous compensation parameters and removing each compensation parameter determined as an erroneous compensation parameter, prior to logging.

It should be noted that the logged compensation parameter may be logged so to be fetched from the memory device from the electric drive system 1 for use in operation of the vehicle. Thus, the vehicle may use a logged compensation parameter.

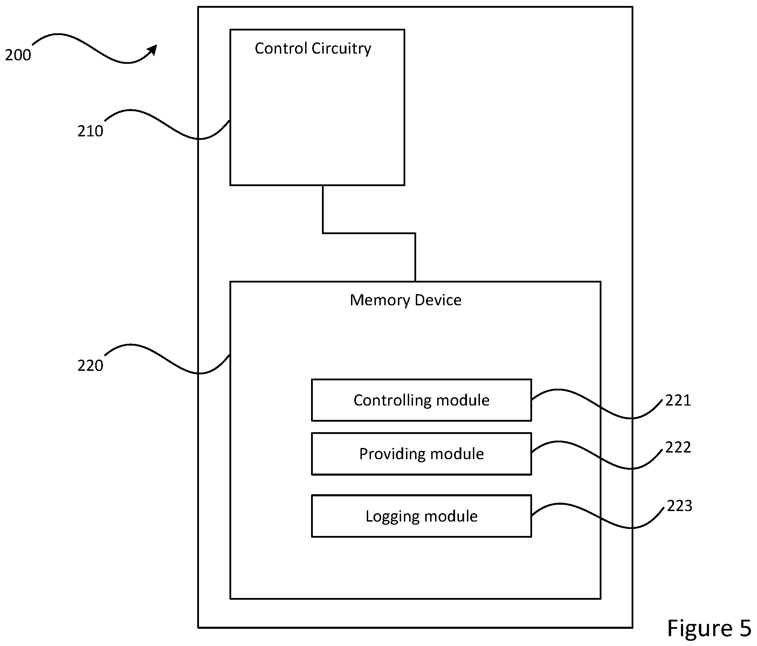

Figure 5 illustrates schematically an electronic control unit of the electric drive system 1 in accordance with some aspects of the present disclosure. which may be implemented in each one of the software modules/-components and/or controllers illustrated in Figure 2 and Figure 3. In other aspects, the modules and/or controllers may comprise a common electronic control unit 200. The electronic control unit 200 may comprise control circuitry 210 and one or more memory devices 220. The control circuitry 210 may comprise, for example, one or more central processing units (CPUs), graphics processing units (GPUs) dedicated to performing calculations, and/or other processing devices. The control circuitry 210 may also comprise input/output interfaces (not shown) for e.g. receiving data from sensor devices and output control signals. The memory device(s) 220 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by each associated module 221-224. Each memory device 220 may store any suitable instructions, data or information, including a computer program, software, an application including one or more of logic, rules, code, tables, etc. and/or other instructions capable of being executed by e.g. control circuitry 210 and, utilized. Specifically, the memory device may comprise a first determining module 221, a second determining module 222, a providing module 223 and a compensating module 224. The memory device 220 may store any instructions and/or programs that may compensate total forward resistance according to the disclosure herein.

The instructions may be executed by the control circuitry 210. For example, the controlling module 221 may comprise instructions controlling an electric machine.

Further, the providing module 222 may comprise instructions/programs for providing a compensation parameter and the logging module 223 may comprise instructions for logging the compensation parameter in the memory 220. Accordingly, the control circuitry 210 may utilize the different modules 221-223, in corresponding devices (such as the current controller 7, flux controller 2 etc.) to determine and implement the parameter to be accessible by the electric drive system 1. In some embodiments, the memory device 220 may be considered to be integrated in the control circuitry.

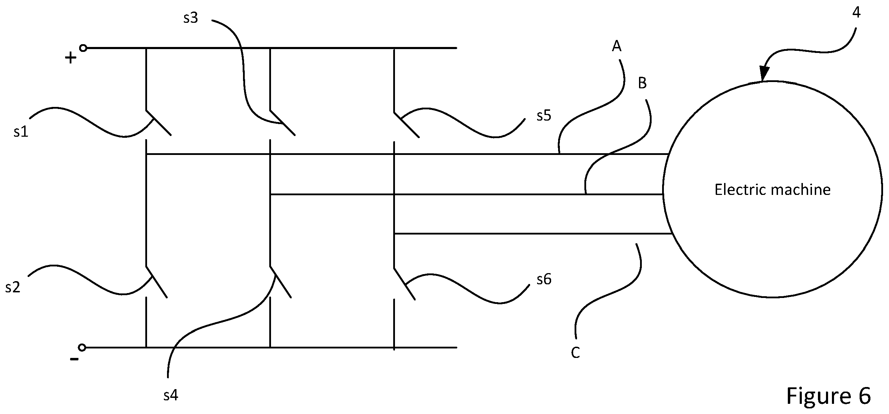

Figure 6 illustrates circuitry for controlling an electric machine 4 of an electric drive system 1. Figure 6 illustrates schematically an example of control of switches by the gate driver 6 shown in Figure 2 and 3, in accordance with said final output $T_{on}$. Specifically, Figure 6 illustrates a circuitry comprising six switches s1-s6. The switches s1-s6 may be transistor switches.

Accordingly, Figure 6 illustrates that the six switches s1-s6 are arranged in pairs, with each pair configured for controlling one corresponding phase A, B, C of the electric machine 4. Hence, the final output may be indicative of the time-period that at least one switch associated to each corresponding phase of the electric machine will be in a specific state (e.g. a time-period/-duration in which one switch of each pair is to be closed so the transistor is conducting). Thus, in Figure 6, the final output may be a time-period in which an upper/first switch s1, s3, s5 of each transistor pair is closed. The upper switches s1, s3, s5 may be considered to connect to the positive side of the dc link while the lower/second switches s2, s4, s6 may be considered to connect to the negative side of the DC link. Thus the actual control of the switches may be performed by the gate driver 6 of the inverter.

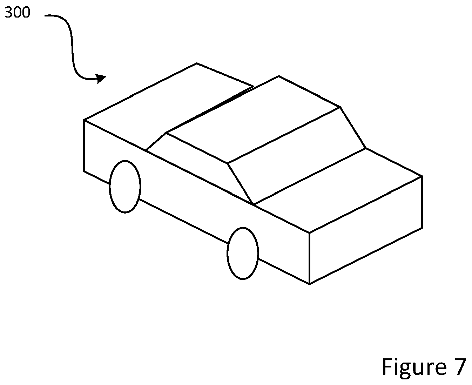

Figure 7 illustrates a vehicle 300 comprising an electric drive system 1 of any aspect herein, the vehicle 300 being configured to use a logged compensation parameter determined by the method of any aspect herein.

**Claims**

1. A method (100) for determining a compensation parameter for compensating a total forward resistance occurring across conducting components of an electric machine, the method comprising:

   - controlling (101) the speed of the electric machine to attain a first speed,
   - providing (102) a compensation parameter that satisfy condition:

      (i) in which a maximum actual phase voltage magnitude, $U_{act}$ , is equal to a reference voltage, $U_{ref}$; and/or
      (ii) in which a voltage setpoint, $U_{set}$, is equal to said maximum actual phase voltage magnitude $U_{act}$;

   - logging (103) the compensation parameter in a memory device accessible by an electric drive system comprising said electric machine.

2. The method (100) of claim 1, wherein the step of controlling (101) the speed comprises:

   - determining (101a) whether the electric machine is in a free-spin state in which the electric machine is operable to rotate independent of influence by an external load torque, wherein the method (100) comprises:

      in response to determining that the electric machine is not in a free-spin state,

         ∘ providing an instruction for controlling the electric machine to said free-spin state, or

      in response to determining that the electric machine is in said free-spin state,

         ∘ controlling the speed to attain the first speed.

3. The method (100) of claim 2, wherein the instruction instructs a control system or a user to control the electric machine to said free-spin state by at least one of:

   - disconnecting the electric machine from at least one wheel, and
   - elevating the electric vehicle to disengage the vehicle from said external load torque.

4. The method (100) of any one of the preceding claims, wherein the step of providing (102) a compensation parameter is performed iteratively to obtain a plurality of compensation parameters, wherein the method (100) comprises, prior to logging (103)

   - averaging the plurality of compensation parameters to obtain an average compensation parameter

   wherein the average compensation parameter is logged in the memory device.

5. The method (100) of claim 4, further comprising:

   - performing a plausibility check to said plurality of compensation parameters;
   - determining, based on said plausibility check, if one or more of said plurality of compensation parameters are erroneous compensation parameters;
   - removing each compensation parameter determined as an erroneous compensation parameter.

6. The method (100) of claim 5, wherein the compensation parameter is provided to satisfy condition (i) and condition (ii), or condition (ii) depending on said attained first speed.

7. The method (100) of any one of claims 4-6, wherein for each performed iteration, a speed of the electric machine is adjusted.

8. The method (100) of any one of the preceding claims, wherein upon controlling the first speed to be a field-weakening speed, providing the compensation parameter that satisfy condition (i) and (ii), and wherein the reference voltage, $U_{ref}$ is based on a DC link voltage.

9. The method (100) of any one of the claims 1-8, wherein upon providing (102) the compensation parameter that satisfy condition (i), the method comprises,

   - determining, in a flux controller, an actual stator flux, $\psi_{act}$, the actual stator flux being an amount of magnetic flux of a stator of said electric machine;
   - determining the maximum actual phase voltage magnitude, $U_{act}$, based on the actual stator flux, $\psi_{act}$;

- feeding the maximum actual phase voltage magnitude, $U_{act}$ and the reference voltage, $U_{ref}$ to a controller configured to receive the maximum actual phase voltage magnitude, $U_{act}$ and the reference voltage, $U_{ref}$ as input and provide the compensation parameter as output;
- controlling the compensation parameter until said maximum actual phase voltage magnitude, $U_{act}$, is equal to said reference voltage, $U_{ref}$
- determining the compensation parameter after controlling.

10. The method (100) of any one of the claims 1-7, wherein upon controlling the first speed to be a speed lower than a field-weakening speed, providing the compensation parameter that satisfy condition (ii).

11. The method (100) any one of the claims 1-10, wherein upon providing (102) the compensation parameter that satisfy condition (ii), the method comprises:

- obtaining, by a stator flux observer, a stator flux, $\Psi_{obs}$
- determining said maximum actual phase voltage magnitude, $U_{act}$, based on said stator flux, $\Psi_{obs}$
- feeding the maximum actual phase voltage magnitude, $U_{act}$ and the voltage setpoint, $U_{set}$, as input and provide the compensation parameter as output;
- controlling said maximum actual phase voltage magnitude, $U_{act}$ and said voltage setpoint, $U_{set}$ until said voltage setpoint, $U_{set}$, is equal to said maximum actual phase voltage magnitude, $U_{act}$,
- determining the compensation parameter after controlling.

12. The method (100) any one of the claims 1-11, wherein the method further comprises, after or prior to logging:

- calculating based on the compensation parameter, a time compensation parameter, $t_{fTotComp}$ for feeding to a pulse width modulator to compensate said total forward voltage resistance.

13. A computer-readable storage medium storing one or more programs configured to be executed by an electric drive system, the one or more programs comprising instructions for performing the method (100) according to any one of the claims 1-12.

14. An electric drive system (1) comprising an electric machine (4), the electric drive system (1) being configured to execute the method (100) of any one of the claims 1-13.

15. A vehicle (300) comprising the electric drive system of claim 14.

Figure 1

Figure 2

Figure 3

EP 4 765 624 A1

Figure 4

Figure 5

Figure 6

Figure 7

300

Europäisches
Patentamt

European
Patent Office

Office européen
des brevets

# EUROPEAN SEARCH REPORT

**Application Number**

EP 25 20 4715

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2024/396483 A1 (TAKASE YOSHIYASU [JP] ET AL) 28 November 2024 (2024-11-28) * the whole document * | 1-15 | INV. H02P21/14 H02P21/16 H02P23/14 |
| X | US 2024/022194 A1 (SZYMULA PAWEL [PL] ET AL) 18 January 2024 (2024-01-18) * the whole document * | 1-15 | |
| A | US 2021/245622 A1 (WANG YUE-YUN [US] ET AL) 12 August 2021 (2021-08-12) * the whole document * | 1-15 | |
| A | KHOA D HOANG ET AL: "Influence and Compensation of Inverter Voltage Drop in Direct Torque-Controlled Four-Switch Three-Phase PM Brushless AC Drives", IEEE TRANSACTIONS ON POWER ELECTRONICS, INSTITUTE OF ELECTRICAL AND ELECTRONICS ENGINEERS, USA, vol. 26, no. 8, 1 August 2011 (2011-08-01), pages 2343-2357, XP011371144, ISSN: 0885-8993, DOI: 10.1109/TPEL.2010.2096561 * the whole document * | 1-15 | **TECHNICAL FIELDS SEARCHED (IPC)** H02P |
| A | LIXIN TANG ET AL: "Low speed performance improvement of a direct torque controlled interior permanent magnet synchronous machine drive", 2004 IEEE APPLIED POWER ELECTRONICS CONFERENCE AND EXPOSITION, APEC 04, IEEE, ANAHEIM, CA, USA, vol. 1, 22 February 2004 (2004-02-22), pages 558-564, XP010705010, DOI: 10.1109/APEC.2004.1295862 ISBN: 978-0-7803-8269-5 * the whole document * | 1-15 | |

-/--

The present search report has been drawn up for all claims

| Place of search | Date of completion of the search | Examiner |
|---|---|---|
| Munich | 12 February 2026 | Fraïssé, Stéphane |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt
European
Patent Office
Office européen
des brevets

**EUROPEAN SEARCH REPORT**

Application Number

EP 25 20 4715

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP 5 740194 B2 (TOSHIBA CORP) 24 June 2015 (2015-06-24) * the whole document * ----- | 1-15 | |

TECHNICAL FIELDS
SEARCHED      (IPC)

The present search report has been drawn up for all claims

| Place of search | Date of completion of the search | Examiner |
|---|---|---|
| Munich | 12 February 2026 | Fraïssé, Stéphane |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

# EP 4 765 624 A1

## ANNEX TO THE EUROPEAN SEARCH REPORT
## ON EUROPEAN PATENT APPLICATION NO.

EP 25 20 4715

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2026

| Patent document cited in search report | | Publication date | Patent family member(s) | | Publication date |
|---|---|---|---|---|---|
| US 2024396483 | A1 | 28-11-2024 | CN | 119030391 A | 26-11-2024 |
| | | | JP | 2024170168 A | 06-12-2024 |
| | | | US | 2024396483 A1 | 28-11-2024 |
| US 2024022194 | A1 | 18-01-2024 | CN | 117439471 A | 23-01-2024 |
| | | | DE | 102022117961 B3 | 14-12-2023 |
| | | | US | 2024022194 A1 | 18-01-2024 |
| US 2021245622 | A1 | 12-08-2021 | CN | 113328479 A | 31-08-2021 |
| | | | DE | 102021101041 A1 | 12-08-2021 |
| | | | US | 2021245622 A1 | 12-08-2021 |
| JP 5740194 | B2 | 24-06-2015 | JP | 5740194 B2 | 24-06-2015 |
| | | | JP | 2012223018 A | 12-11-2012 |

EPO FORM P0459

For more details about this annex : see Official Journal of the European Patent Office, No. 12/82